# EUROPEAN PATENT SPECIFICATION

(11) **EP 2 442 488 B1**
(45) Date of publication and mention of the grant of the patent: **27.04.2016**
(21) Application number: 10788922.2
(22) Date of filing: 12.06.2010
(51) Int. Cl.: H04L 12/26

(54) **DEVICE FOR DETECTING PHYSICAL LINK AND METHOD THEREOF**
VORRICHTUNG ZUR ERKENNUNG EINER PHYSIKALISCHEN VERKNÜPFUNG UND VERFAHREN DAFÜR
DISPOSITIF POUR LA DETECTION DE LIEN PHYSIQUE ET PROCEDE CORRESPONDANT

(30) Priority: 28.09.2009 CN 200910190646
(43) Date of publication of application: 18.04.2012
(73) Proprietor: ZTE Corporation, Shenzhen, Guangdong 518057 (CN)
(72) Inventor: ZHANG, Panke, Shenzhen Guangdong 518057 (CN)
(74) Representative: Awapatent AB
(86) International application number: PCT/CN2010/073906
(87) International publication number: WO 2010/145526

(56) References cited:
- WO-A1-2009/019258
- CN-A- 1 452 347
- CN-A- 101 179 479
- CN-A- 101 511 100
- CN-A- 101 674 595
- US-A1- 2006 215 544
- US-A1- 2009 006 650

## Description

### Technical Field

The present invention relates to the detecting technique in the field of communication, and in particular, to a device for detecting a physical link and a method thereof.

### Background of the Related Art

In the wireless communication system, there are often situations of equipments cascading networking. Those equipments are connected via the physical mediums, such as optical fibers and cables, etc., to form the physical link. When a physical link failure (such as open circuit, short circuit, and unpaired sending and receiving) occurs, the normal operation of the system could be influenced. In order to rapidly and accurately locate and maintain the physical link in which the failure occurs, the failure of the physical link needs to be detected rapidly and accurately, so as to find the reason and location of the failure occurrence.

Now, the techniques for used by detecting the physical link in the wireless communication system mainly include the manual testing technique and the timing polling testing technique.

The manual testing technique includes two types: one type is to manually send instructions and to perform testing according to the instructions by the system; another type is to use externally connected dedicated detection equipment to perform the detection. The timing polling testing technique is to perform the locating testing on the link failure by means of timing startup.

The disadvantages of the manual testing technique are in that when the physical link failure occurs, the operation personnel is required to arrive at the field in time to perform the operation and the operation personnel is also required to have a certain experience and skill. Due to the uncertainty of the occurrence of the physical link failure, the operation personnel is very difficult to arrive at the field in time, and the labor and material costs of the detection will be increased.

The timing polling testing technique can only solve a part of the disadvantages of the manual testing. The generally used timing polling testing technique is that the detecting end sends the detection sequence and the detected equipment again returns the detection sequence to the detecting end without performing any processing to the detection sequence after receiving the detection sequence. It is considered that the physical link is normal as long as the detecting end receives the detection sequence; or else, it is considered that the physical link is abnormal. Therefore, the generally used timing polling testing technique can only detect the situation of the open circuit of the physical link, but cannot detect the situations such as the short circuit or loopback, unpaired receiving and sending, and loopback with unpaired receiving and sending, etc., thereby producing larger difficulty to start the equipment and maintain the failure.

Further, US20090006650 A1 discloses a communication device connected to a network includes a communication unit used for communications with the network, a data transmission unit that transmits data having a first address indicating the communication unit as a destination and a second address different from the first address as a source from the communication unit to the network, and a reply detection unit that receives the data returned from the network to the communication unit. CN101179479 A discloses a method, system and node for transmitting operation management and maintenance packet of ethernet.

### Summary of the Invention

The object of the present invention is to provide a device for detecting a physical link and a method thereof, which are used for solving the problem that the existing manual testing technique and timing polling testing technique cannot detect the short circuit or loopback, the unpaired receiving and sending, and the loopback with unpaired receiving and sending, etc. in the physical link.

The above problems are solved by a device according to claim 1 and a method according to claim 8. Further improvements and embodiments are provided in the dependent claims.

The technical scheme of the present invention is further implemented as follows.

Also provided is a device for detecting a physical link, comprising:
a detection signal sending module, which is used to: send a detection signal to a detected end;
a detection signal receiving module, which is used to: receive a returned detection signal after the detected end processing the detection signal;
a detection signal processing module, which is used to: re-process the returned detection signal that is processed by the detected end; and
a detecting module, which is used to: determine whether a physical link failure occurs according to the detection signal that is re-processed.

The detection signal includes a detection sequence and the detection sequence includes a sequence header identifier and an equipment port number.

A length of the sequence header identifier is larger than a length of the equipment port number of the detecting end.

The detecting end and the detected end process the detection sequence in the detection signal both by means of bitwise NOT.

The detecting module is also used to detect whether the detection sequence in the detection signal received by the detection signal receiving module includes the sequence header identifier; if does not include, determine that the physical link failure occurs; and if includes, then further detect the equipment port number of the detection sequence in the detection signal, so as to determine a failure type according to both the sequence header identifier and the equipment port number.

The failure type includes: an open circuit in the physical link, a short circuit or a loopback in the physical link, unpaired receiving and sending in the physical link, and a loopback with unpaired receiving and sending in the physical link.

Also provided is a method for detecting a physical link, comprising:
a detecting end sending a detection signal to a detected end;
the detected end returning the detection signal to the detecting end after processing the received detection signal; and
the detecting end re-processing the detection signal that has been processed from the detected end, and determining whether a physical link failure occurs according to the detection signal that is re-processed.

The detection signal includes a detection sequence and the detection sequence includes a sequence header identifier and an equipment port number.

A length of the sequence header identifier is larger than a length of the equipment port number of the detecting end.

The detecting end and the detected end process the detection sequence in the detection signal both by means of bitwise NOT.

A process of determining whether the physical link failure occurs comprises:
when the detecting end does not detect the sequence header identifier of the detection sequence, determining that the physical link failure occurs and a failure type is an open circuit in the physical link.

A process of determining whether the physical link failure occurs comprises:
when the detecting end detects the sequence header identifier, the detecting end further detecting the equipment port number of the detection sequence, so as to determine a failure type according to both the sequence header identifier and the equipment port number.

The process of determining whether the physical link failure occurs comprises:
when the sequence header identifiers that are received and sent by the detecting end are same and the equipment port numbers that are received and sent are same, determining that the physical link is normal.

The process of determining whether the physical link failure occurs comprises:
when the sequence header identifiers that are received and sent by the detecting end are opposite and the equipment port numbers that are received and sent are same, determining that the physical link is a loopback with unpaired receiving and sending.

The process of determining whether the physical link failure occurs comprises:
when the sequence header identifiers that are received and sent by the detecting end are same and the equipment port numbers that are received and sent are opposite, determining that the physical link is unpaired receiving and sending.

The process of determining whether the physical link failure occurs comprises:
when the sequence header identifiers that are received and sent by the detecting end are opposite and the equipment port numbers that are received and sent are opposite, determining that the physical link is a short circuit or a loopback.

The device for detecting the physical link and the method thereof in the present invention can solve the problem that the existing manual testing technique and timing polling testing technique cannot detect the problems except the open circuit in the physical link, such as the short circuit or loopback, unpaired receiving and sending, or loopback with unpaired receiving and sending, etc..

### Brief Description of Drawings

FIG. 1 is a schematic diagram of the structure of the device for detecting a physical link according an embodiment of the present invention;
FIG. 2 is a schematic diagram of the detection sequence used in the embodiment of the present invention;
FIG. 3 is a schematic diagram of which a type of the physical link failure is that both a sending link and a receiving link are open circuits;
FIG. 4 is a schematic diagram of which a type of the physical link failure is that the sending link and the receiving link are reversed;
FIG. 5 is a schematic diagram of which a type of the physical link failure is that the physical link is the loopback or short circuit;
FIG. 6 is a schematic diagram of which a type of the physical link failure is that the physical link is the unpaired receiving and sending;
FIG. 7 is a schematic diagram of which a type of the physical link failure is that the physical link is the loopback with unpaired receiving and sending;
FIG. 8 is a flow chart of the method for detecting a physical link according to an embodiment of the present invention;
FIG. 9 is a flow chart of the method for detecting a physical link according to another embodiment of the present invention.

### Preferred Embodiments of the Present Invention

The technical scheme of the present invention is further described in detail with reference to the accompanying drawings and the specific embodiments hereinafter, so as to make that those skilled in the art can understand the present invention much better and also can implement the present invention. However, the given embodiments are not intended to limit the present invention.

The embodiment of the present invention is applied to any communication system with the receiving and sending ports, such as the communication system interconnected by the Common Public Radio Interface (CPRI).

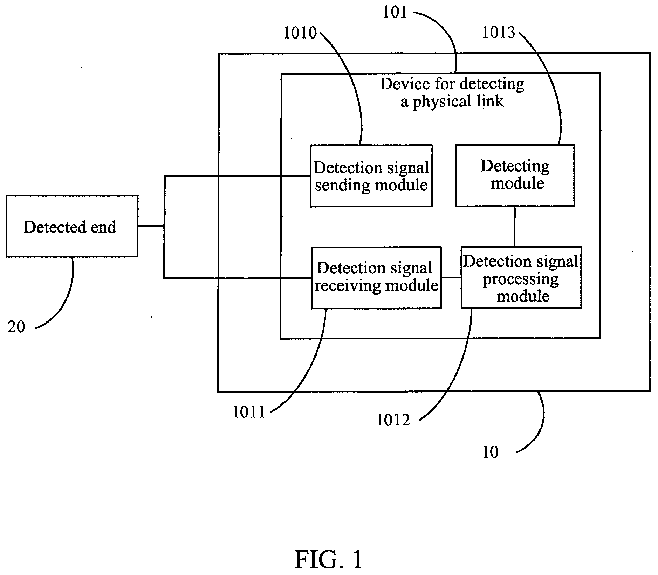

FIG. 1 is a schematic diagram of the structure of the device for detecting a physical link 101 in an embodiment of the present invention.

The device for detecting the physical link 101 is configured in a detection end 10 and used to detect a detected end 20. The device for detecting the physical link 101 comprises a detection signal sending module 1010, a detection signal receiving module 1011, a detection signal processing module 1012 and a detecting module 1013.

The detecting end 10 can be a Radio Equipment Controller (REC) or a Building Baseband Unit (BBU). The detected end 20 can be Radio Equipment (RE) or a Remote Radio Unit (RRU).

The detection signal sending module 1010 is used to send a detection signal to the detected end 20. The detection signal receiving module 1011 is used to receive the returned detection signal after the detected end 20 processing the detection signal. The detection signal processing module 1012 is used to re-process the detection signal that is processed by the detected end 20. The detecting module 1013 is used to determine whether a physical link failure occurs according to the re-processed detection signal.

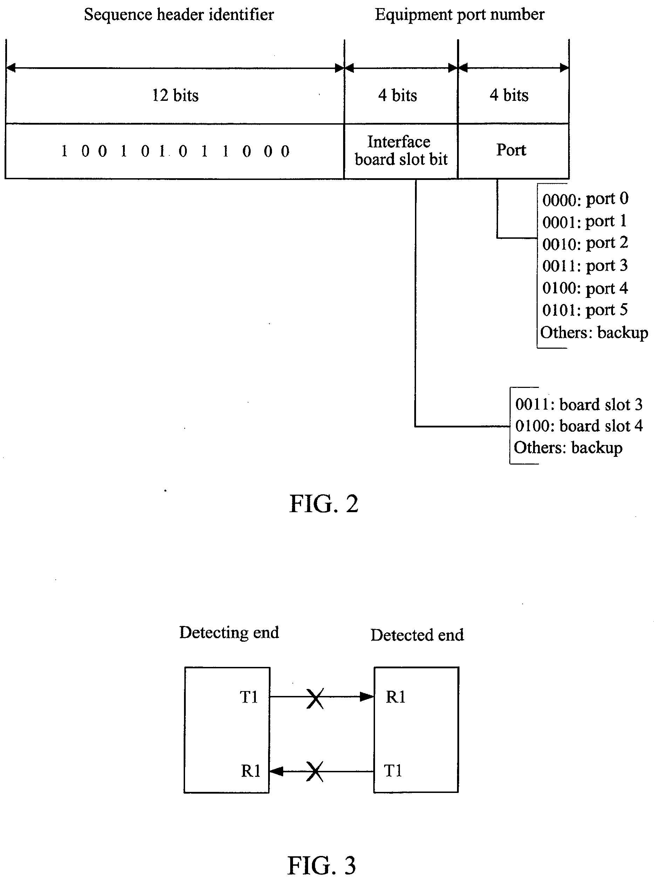

In this embodiment, the detection signal includes a detection sequence. The detection sequence includes a sequence header identifier and an equipment port number. The length of the sequence header identifier needs to be larger than the length of the equipment port number of the detecting end. Preferably, the length of the sequence header identifier needs to be at least 3 bits larger than the length of the equipment port number of the detecting end, and the equipment port numbers of each detecting end 10 are unique in the same communication system. The specific structure of the detection sequence is shown in FIG. 2 which is a schematic diagram of the detection sequence used in the embodiment of the present invention. The sequence header identifier of the detection sequence is 12 bits, e.g. 1001 0101 1000, and the equipment port number is 8 bits. The equipment port number further includes a 4-bit interface board slot bit and a 4-bit port bit. The 4-bit interface board slot bit could be 0011, 0100 or other backup board slot bits. The 4-bit port bit can be 0000, 0001, 0010, 0011, 0100, 0101 or other backup port bits.

Since the length of the sequence header identifier of the detection sequence is at least 3 bits larger than the length of the equipment port number of the detecting end as shown in FIG. 2, thus it can be ensured that an error detection of the sequence header identifier (including the bitwise NOT value thereof) will not occur even if the equipment port number is any value when the detection sequence is transmitted by means of serial time division. In other words, the detection sequence used in the present invention is not limited to the means shown in FIG. 2. A detection sequence can act as the detection sequence of the present invention as long as the detection sequence satisfies the above requirements, and it should be considered that the equivalents means and variations means are already disclosed or mentioned in the description of the present invention.

The detection signal processing module 1012 in the detecting end 10 and the detected end 20 both process the detection sequence in the detection signal by means of the bitwise NOT. In this embodiment, the bitwise NOT refers that 0 is changed to 1 or 1 is changed to 0.

The detecting module 1013 is also used to detect whether the detection signal received by the detection signal receiving module 1011 includes the sequence header identifier; and if not, determine that the physical link failure occurs and the failure type is the open circuit of the physical link; if yes, then the detecting module 1013 is also used to further detect the equipment port number of the detection sequence, so as to determine the failure type according to both the sequence header identifier and the equipment port number. It is specifically as follows.

If the detecting module 1013 detects that the sequence header identifier received by the detection signal receiving module 1011 is the same as the sequence header identifier sent by the detection signal sending module 1010, and if the equipment port number received by the detection signal receiving module 1011 is the same as the equipment port number sent by the detection signal sending module 1010, then it is determined that the physical link is normal.

If the detecting module 1013 detects that the sequence header identifier received by the detection signal receiving module 1011 is opposite to the sequence header identifier sent by the detection signal sending module 1010, and if the equipment port number received by the detection signal receiving module 1011 is totally bitwise NOT to the equipment port number sent by the detection signal sending module 1010, then it is determined that the physical link is the short circuit or loopback.

If sequence header identifier received by the detection signal receiving module 1011 is the same as the sequence header identifier sent by the detection signal sending module 1010, and if the equipment port number received by the detection signal receiving module 1011 is opposite to the equipment port number sent by the detection signal sending module 1010, then it is determined that the physical link is the unpaired receiving and sending.

If the detecting module 1013 detects that the sequence header identifier received by the detection signal receiving module 1011 is opposite to the sequence header identifier sent by the detection signal sending module 1010, and if the equipment port number received by the detection signal receiving module 1011 is not totally bitwise NOTto the equipment port number sent by the detection signal sending module 1010, then it is determined that the physical link is the loopback with unpaired receiving and sending.

FIG. 3 to FIG. 7 are schematic diagrams of failure types of which physical link failure occurs, wherein T1 and R1 represent the sending and receiving performed through a port 1 respectively; T2 and R2 represent the sending and receiving performed through a port 2 respectively, and so on. The solid line represents the actual connected physical link (now the physical connection might be an incorrect connection), and the dotted line represents the correct physical link connection way (i.e. the connection way in terms of the dotted line is correct).

FIG. 3 is a schematic diagram of which a type of the physical link failure is that both a sending link and a receiving link are open circuits. At this moment, the detecting end 10 cannot receive the sequence header identifier.

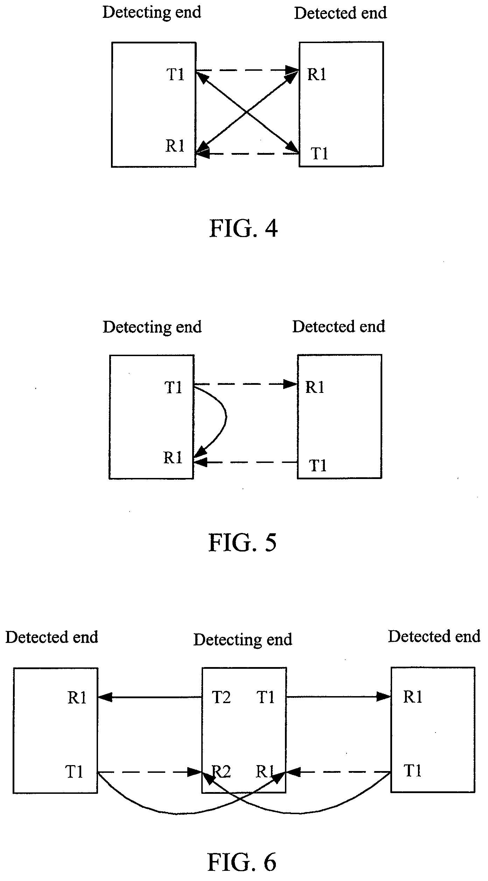

FIG. 4 is a schematic diagram of which the type of the physical link failure is that the sending link and the receiving link are reversed. In this case, the type of the physical link failure is also that the sending link and the receiving link are both open circuits, which can be classified into one type with the failure type shown in FIG. 1. At this moment, the detecting end 10 either cannot receive the sequence header identifier.

It should be described that the case shown in FIG. 3 is that the open circuit really occurs in the physical link, while the case shown in FIG. 4 is that the connection should originally be in terms of the way shown by the dotted line in FIG. 4, however the connection is in terms of the way of the solid line when being connected in practice, thereby causing that the sequence header identifier cannot be detected and it is considered that the physical link is the open circuit.

FIG. 5 is a schematic diagram of which a type of the physical link failure is that the physical link is the loopback or short circuit. Because the detection method known in the art could detect the sent sequence, it is determined that the link is normal. However, according to the detection method of this embodiment, since the sequence header identifier and the equipment port number that are received by the detecting end 10 are totally bitwise NOT to the sent ones, thus it can be determined that the failure type is the loopback or short circuit in the physical link. The generation reason of this failure type is also caused by the incorrect connection. At this moment, the connection only in terms of the way of the dotted line should be correct.

FIG. 6 is a schematic diagram of which a type of the physical link failure is that the physical link is the unpaired receiving and sending. The detection method known in the art will directly and incorrectly determine that the physical link connection is normal because the detecting end 10 receives the sent detection sequence. However, according to the detection method of this embodiment, since the sequence header identifier received by the detecting end 10 is totally the same as the sent one and the equipment port number is opposite to the sent one, thus it can be determined that the failure type is unpaired receiving and sending in the physical link. The generation reason of this failure type is also caused by the incorrect connection. At this moment, the connection only in terms of the way of the dotted line should be correct.

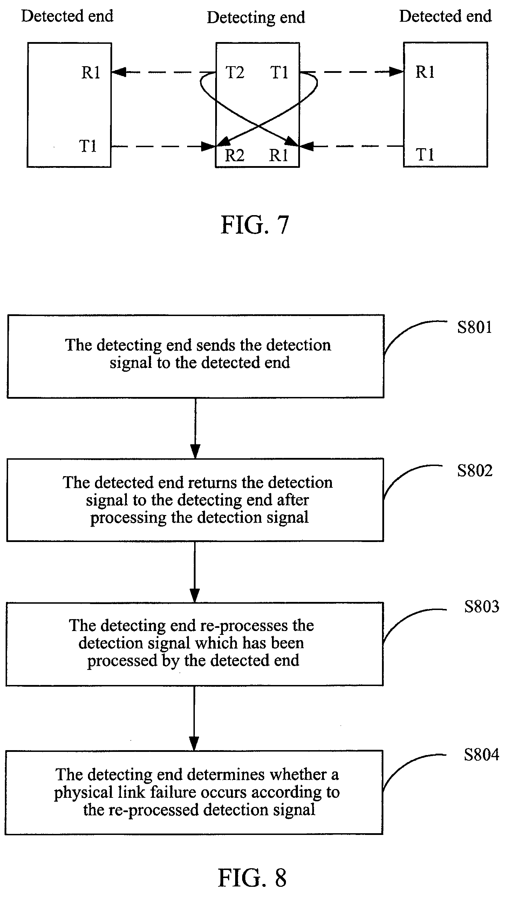

FIG. 7 is a schematic diagram of which a type of the physical link failure is that the physical link is the loopback with unpaired receiving and sending. The detection method known in the art will directly and incorrectly determine that the physical link connection is normal as well because the detecting end 10 receives the sent detection sequence. However, according to the detection method of this embodiment, since the sequence header identifier received by the detecting end 10 is totally opposite to the sent one and the equipment port number is not totally bitwise NOTto the sent one, thus it can be determined that the failure type is the loopback with unpaired receiving and sending in the physical link. The generation reason of this failure type is also caused by the incorrect connection. At this moment, the connection in terms of the way of the dotted line should be correct.

FIG. 8 is a flow chart of the method for detecting a physical link in an embodiment of the present invention.

Step S801, a detecting end 10 sends a detection signal to a detected end 20. In this embodiment, the detecting end 10 can be a radio equipment controller or a building baseband unit. The detected end 20 can be radio equipment or a remote radio unit. The detection signal includes a detection sequence. The detection sequence includes a sequence header identifier and an equipment port number. The length of the sequence header identifier needs to be larger than the length of the equipment port number of the detecting end. Preferably, the length of the sequence header identifier needs to be at least 3 bits larger than the length of the equipment port number of the detecting end, and the equipment port numbers of each detecting end 10 are unique in the same communication system.

Step S802, the detected end 20 returns the detected signal to the detecting end 10 after processing the detected signal. In this embodiment, the detected end 20 processes the detection sequence in the detection signal by means of the bitwise NOT.

Step S803, the detecting end 10 re-processes the detection signal that has been processed by the detected end 20. In this embodiment, the detected end 10 processes the detection sequence in the detection signal by means of the bitwise NOT.

Step S804, the detecting end 10 determines whether a physical link failure occurs according to the re-processed detection signal. In this embodiment, the types of the physical link failure include: an open circuit in the physical link, a short circuit or loopback in the physical link, unpaired receiving and sending in the physical link, and a loopback with unpaired receiving and sending in the physical link.

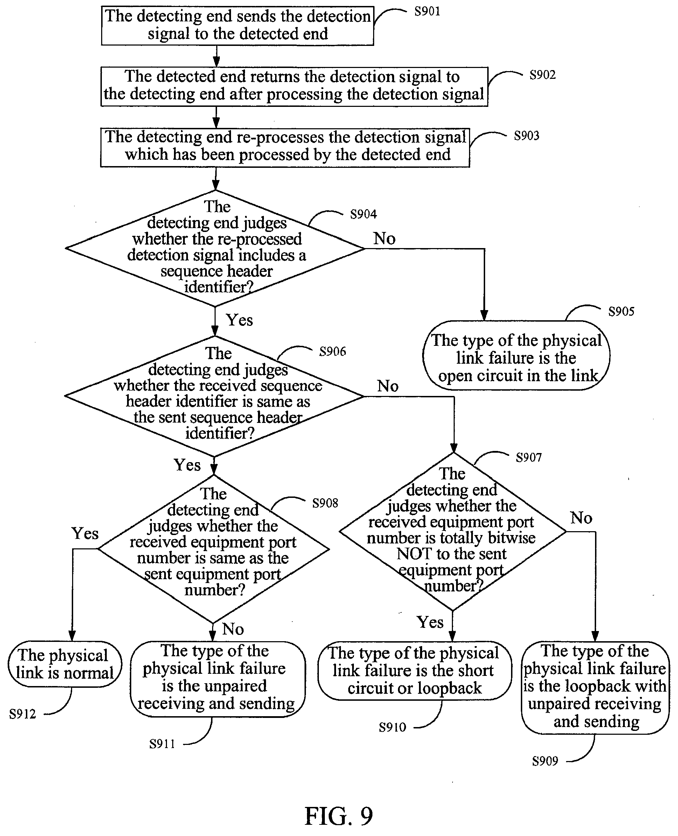

FIG. 9 is a flow chart of the method for detecting physical link in another embodiment of the present invention.

Step S901, a detecting end 10 sends a detection signal to a detected end 20. In this embodiment, the detecting end 10 can be a radio equipment controller or a building baseband unit. The detected end 20 can be radio equipment or a remote radio unit. The detection signal includes a detection sequence. The detection sequence includes sequence header identifier and an equipment port number. The length of the sequence header identifier needs to be larger than the length of the equipment port number of the detecting end. Preferably, the length of the sequence header identifier needs to be at least 3 bits larger than the length of the equipment port number of the detecting end, and the equipment port numbers of each detecting end 10 are unique in the same communication system.

Step S902, the detected end 20 returns the detected signal to the detecting end 10 after processing the detected signal. In this embodiment, the detected end 20 processes the detection sequence in the detection signal by means of the bitwise NOT.

Step S903, the detecting end 10 re-processes the detection signal that has been processed by the detected end 20. In this embodiment, the detected end 10 processes the detection sequence in the detection signal by means of the bitwise NOT.

Step S904, the detecting end 10 judges whether the re-processed detection signal includes the sequence header identifier. If the detecting end 10 does not detect the sequence header identifier, then the step S905 is performed. If the detecting end 10 detects the sequence header identifier, then the step S906 is performed.

Step S905, the detecting end 10 determines that the physical link failure occurs and the failure type is the open circuit in the link.

Step S906, the detecting end 10 judges whether the received sequence header identifier is the same as the sent sequence header identifier. If same, then the step S908 is performed; if opposite, then the step S907 is performed.

Step S907, the detecting end 10 judges whether the received equipment port number is totally bitwise NOT to the sent equipment port number. If yes, then the step S910 is performed to determine that the failure type of the link is the loopback with unpaired receiving and sending; if not, then step S909 is performed to determine that the failure type of the physical link is the short circuit or the loopback.

Step S908, the detecting end 10 judges whether the received equipment port number is the same as the sent equipment port number. If same, then the step S912 is performed to determine that the physical link is normal; if opposite, then step S911 is performed to determine that the type of the physical link failure is the unpaired receiving and sending.

The device for detecting the physical link 101 and the method thereof in the present invention can solve the problem that the existing manual testing technique and the timing polling testing technique cannot detect the problems except the open circuit of the physical link, such as the short circuit or the loopback, the unpaired receiving and sending, or the loopback with unpaired receiving and sending, etc..

The above description is only the preferable embodiments of the present invention and is not intended to limit the patent scope of the present invention. All transformations of equivalents structures or equivalents flows made by using the description and accompanying drawings of the present invention, or the direct or indirect use in other related technical field, should fall into the patent protection scope of the present invention as defined by the appended claims.

## Claims

1. A device for detecting a physical link, comprising:
a detection signal sending module (1010), which is used to: send a detection signal to a detected end (20), wherein the detection signal includes a detection sequence and the detection sequence includes a sequence header identifier and an equipment port number;
a detection signal receiving module (1011), which is used to: receive a returned detection signal after the detected end (20) performs a first processing on the detection signal by means of bitwise NOT;
a detection signal processing module (1012), which is used to: perform a second processing by means of the bitwise NOT on the returned detection signal returned by the detected end (20), and send a re-processed detection signal to a detecting module (1013); and
the detecting module (1013), which is used to: detect whether a sequence header identifier included in the re-processed detection signal is the same as the sequence header identifier included in the detection signal sent by the detection signal sending module (1010) and whether an equipment port number included in the re-processed detection signal is the same as the equipment port number included in the detection signal sent by the detection signal sending module (1010), and then determine a failure type of a physical link according to a detection result, wherein the failure type of the physical link includes: an open circuit in the physical link, a short circuit or a loopback in the physical link, unpaired receiving and sending in the physical link, and a loopback with unpaired receiving and sending in the physical link.

2. The device according to claim 1, wherein a length of the sequence header identifier is larger than a length of the equipment port number of a detecting end (10).

3. The device according to claim 1 or 2, wherein the detecting module (1013) is also used to detect whether a detection sequence in the re-processed detection signal received by the detecting module (1013) includes a sequence header identifier; if not, determine that a physical link failure occurs and the failure type is the open circuit in the physical link.

4. The device according to claim 1 or 2, wherein the detecting module (1013) is also used to detect that the sequence header identifier included in the re-processed detection signal is the same as the sequence header identifier included in the detection signal sent by the detection signal sending module (1010), and the equipment port number included in the re-processed detection signal is the same as the equipment port number included in the detection signal sent by the detection signal sending module (1010), then determine that the physical link is normal.

5. The device according to claim 1 or 2, wherein the detecting module (1013) is also used to detect that the sequence header identifier included in the re-processed detection signal is the same as the sequence header identifier included in the detection signal sent by the detection signal sending module (1010), and the equipment port number included in the re-processed detection signal is opposite to the equipment port number included in the detection signal sent by the detection signal sending module (1010), then determine that the physical link is the unpaired receiving and sending.

6. The device according to claim 1 or 2, wherein the detecting module (1013) is also used to detect that the sequence header identifier included in the re-processed detection signal is opposite to the sequence header identifier included in the detection signal sent by the detection signal sending module (1010), and the equipment port number included in the re-processed detection signal is totally bitwise NOT to the equipment port number included in the detection signal sent by the detection signal sending module (1010), then determine that the physical link is the short circuit or the loopback.

7. The device according to claim 1 or 2, wherein the detecting module (1013) is also used to detect that the sequence header identifier included in the re-processed detection signal is opposite to the sequence header identifier included in the detection signal sent by the detection signal sending module (1010), and the equipment port number included in the re-processed detection signal is not totally bitwise NOT to the equipment port number included in the detection signal sent by the detection signal sending module (1010), then determine that the physical link is the loopback with unpaired receiving and sending.

8. A method for detecting a physical link, comprising:
a detecting end (10) sending a detection signal to a detected end (20), wherein the detection signal includes a detection sequence and the detection sequence includes a sequence header identifier and an equipment port number;
the detecting end (10) receiving a returned detection signal returned by the detected end (20) after the detected end (20) performs a first processing on the detection signal by means of bitwise NOT; and
the detecting end (10) performing a second processing by means of the bitwise NOT on the returned detection signal to obtain a re-processed detection signal, and detecting whether a sequence header identifier included in the re-processed detection signal is the same as the sequence header identifier included in the detection signal and whether an equipment port number included in the re-processed detection signal is the same as the equipment port number included in the detection signal; and
the detecting end (10) determining a failure type of a physical link according to a detection result, wherein the failure type of the physical link includes: an open circuit in the physical link, a short circuit or a loopback in the physical link, unpaired receiving and sending in the physical link, and a loopback with unpaired receiving and sending in the physical link.

9. The method according to claim 8, wherein a length of the sequence header identifier is larger than a length of the equipment port number of the detecting end (10).

10. The method according to claim 8 or 9, wherein the step of the detecting end (10) determining a failure type of a physical link further comprises:
when the detecting end (10) does not detect that the detection sequence in the re-processed detection signal includes the sequence header identifier, determining that a physical link failure occurs and the failure type is the open circuit in the physical link.

11. The method according to claim 8 or 9, wherein the step of the detecting end (10) determining a failure type of a physical link further comprises:
the detecting end (10), when detecting that the sequence header identifier included in the re-processed detection signal and the sequence header identifier included in the sent detection signal are same, and the equipment port number included in the re-processed detection signal and the equipment port number included in the sent detection signal are same, determining that the physical link is normal.

12. The method according to claim 8 or 9, wherein the step of the detecting end (10) determining a failure type of a physical link further comprises:
the detecting end (10), when detecting that the sequence header identifier included in the re-processed detection signal and the sequence header identifier included in the sent detection signal are opposite, and the equipment port number included in the re-processed detection signal and the equipment port number included in the sent detection signal are not totally bitwise NOT, determining that the physical link is the loopback with unpaired receiving and sending.

13. The method according to claim 8 or 9, wherein the step of the detecting end (10) determining a failure type of a physical link further comprises:
the detecting end (10), when detecting that the sequence header identifier included in the re-processed detection signal and the sequence header identifier included in the sent detection signal are opposite, and the equipment port number included in the re-processed detection signal and the equipment port number included in the sent detection signal are totally bitwise NOT, determining that the physical link is the short circuit or the loopback.

14. The method according to claim 8 or 9, wherein the step of the detecting end (10) determining a failure type of a physical link further comprises:
the detecting end (10), when detecting that the sequence header identifier included in the re-processed detection signal and the sequence header identifier included in the sent detection signal are same, and the equipment port number included in the re-processed detection signal and the equipment port number included in the sent detection signal are opposite, determining that the physical link is the unpaired receiving and sending.

## Patentansprüche

1. Vorrichtung zum Detektieren eines physischen Links, die Folgendes umfasst:
ein Detektionssignal-Sendemodul (1010), das dafür verwendet wird, ein Detektionssignal an ein detektiertes Ende (20) zu senden, wobei das Detektionssignal eine Detektionssequenz enthält, und die Detektionssequenz einen Sequenzheader-Identifikator und eine Geräteportnummer enthält;
ein Detektionssignal-Empfangsmodul (1011), das dafür verwendet wird, ein zurückgesendetes Detektionssignal zu empfangen, nachdem das detektierte Ende (20) eine erste Verarbeitung an dem Detektionssignal mittels eines Bit-weisen NOT ausgeführt hat;
ein Detektionssignal-Verarbeitungsmodul (1012), das dafür verwendet wird, eine zweite Verarbeitung mittels des Bit-weisen NOT an dem zurückgesendeten Detektionssignal auszuführen, das durch das detektierte Ende (20) zurückgesendet wurde, und ein neu verarbeitetes Detektionssignal an ein Detektionsmodul (1013) zu senden; und
wobei das Detektionsmodul (1013) dafür verwendet wird zu detektieren, ob ein in dem neu verarbeiteten Detektionssignal enthaltener Sequenzheader-Identifikator der gleiche ist wie der Sequenzheader-Identifikator, der in dem Detektionssignal enthalten ist, das durch das Detektionssignal-Sendemodul (1010) gesendet wurde, und ob eine in dem neu verarbeiteten Detektionssignal enthaltene Geräteportnummer die gleiche ist wie die Geräteportnummer, die in dem Detektionssignal enthalten ist, das durch das Detektionssignal-Sendemodul (1010) gesendet wurde, und dann eine Ausfallart eines physischen Links gemäß einem Detektionsergebnis zu bestimmen, wobei die Ausfallart des physischen Links Folgendes enthält: einen Offenkreis in dem physischen Link, einen Kurzschluss oder einen Loopback in dem physischen Link, ungepaartes Empfangen und Senden in dem physischen Link, und einen Loopback mit ungepaartem Empfangen und Senden in dem physischen Link.

2. Vorrichtung nach Anspruch 1, wobei eine Länge des Sequenzheader-Identifikators größer ist als eine Länge der Geräteportnummer eines detektierenden Endes (10).

3. Vorrichtung nach Anspruch 1 oder 2, wobei das Detektionsmodul (1013) des Weiteren dafür verwendet wird zu detektieren, ob eine Detektionssequenz in dem durch das Detektionsmodul (1013) empfangenen neu verarbeiteten Detektionssignal einen Sequenzheader-Identifikator enthält; und wenn nicht, zu bestimmen, dass ein Ausfall eines physischen Links eingetreten ist und die Ausfallart der Offenkreis in dem physischen Link ist.

4. Vorrichtung nach Anspruch 1 oder 2, wobei das Detektionsmodul (1013) des Weiteren dafür verwendet wird zu detektieren, dass der in dem neu verarbeiteten Detektionssignal enthaltene Sequenzheader-Identifikator der gleiche ist wie der Sequenzheader-Identifikator, der in dem Detektionssignal enthalten ist, das durch das Detektionssignal-Sendemodul (1010) gesendet wurde und die in dem neu verarbeiteten Detektionssignal enthaltene Geräteportnummer die gleiche ist wie die Geräteportnummer, die in dem Detektionssignal enthalten ist, das durch das Detektionssignal-Sendemodul (1010) gesendet wurde, und dann zu bestimmen, dass der physische Link normal ist.

5. Vorrichtung nach Anspruch 1 oder 2, wobei das Detektionsmodul (1013) des Weiteren dafür verwendet wird zu detektieren, dass der in dem neu verarbeiteten Detektionssignal enthaltene Sequenzheader-Identifikator der gleiche ist wie der Sequenzheader-Identifikator, der in dem Detektionssignal enthalten ist, das durch das Detektionssignal-Sendemodul (1010) gesendet wurde, und die in dem neu verarbeiteten Detektionssignal enthaltene Geräteportnummer der Geräteportnummer entgegengesetzt ist, die in dem Detektionssignal enthalten ist, das durch das Detektionssignal-Sendemodul (1010) gesendet wurde, und dann zu bestimmen, dass der physische Link das ungepaarte Empfangen und Senden ist.

6. Vorrichtung nach Anspruch 1 oder 2, wobei das Detektionsmodul (1013) des Weiteren dafür verwendet wird zu detektieren, dass der in dem neu verarbeiteten Detektionssignal enthaltene Sequenzheader-Identifikator dem Sequenzheader-Identifikator entgegengesetzt ist, der in dem Detektionssignal enthalten ist, das durch das Detektionssignal-Sendemodul (1010) gesendet wurde, und die in dem neu verarbeiteten Detektionssignal enthaltene Geräteportnummer ein vollständig Bit-weises NOT zu der Geräteportnummer ist, die in dem Detektionssignal enthalten ist, das durch das Detektionssignal-Sendemodul (1010) gesendet wurde, und dann zu bestimmen, dass der physische Link der Kurzschluss oder der Loopback ist.

7. Vorrichtung nach Anspruch 1 oder 2, wobei das Detektionsmodul (1013) des Weiteren dafür verwendet wird zu detektieren, dass der in dem neu verarbeiteten Detektionssignal enthaltene Sequenzheader-Identifikator dem Sequenzheader-Identifikator entgegengesetzt ist, der in dem Detektionssignal enthalten ist, das durch das Detektionssignal-Sendemodul (1010) gesendet wurde, und die in dem neu verarbeiteten Detektionssignal enthaltene Geräteportnummer kein vollständig Bit-weises NOT zu der Geräteportnummer ist, die in dem Detektionssignal enthalten ist, das durch das Detektionssignal-Sendemodul (1010) gesendet wurde, und dann zu bestimmen, dass der physische Link der Loopback mit ungepaartem Empfangen und Senden ist.

8. Verfahren zum Detektieren eines physischen Links, das Folgendes umfasst:
ein detektierendes Ende (10), das ein Detektionssignal zu einem detektierten Ende (20) sendet, wobei das Detektionssignal eine Detektionssequenz enthält und die Detektionssequenz einen Sequenzheader-Identifikator und eine Geräteportnummer enthält;
wobei das detektierende Ende (10) ein zurückgesendetes Detektionssignal empfängt, das durch das detektierte Ende (20) zurückgesendet wurde, nachdem das detektierte Ende (20) eine erste Verarbeitung an dem Detektionssignal mittels eines Bit-weisen NOT ausgeführt hat; und
wobei das detektierende Ende (10) eine zweite Verarbeitung mittels des Bit-weisen NOT an dem zurückgesendeten Detektionssignal ausführt, um ein neu verarbeitetes Detektionssignal zu erhalten, und detektiert, ob ein in dem neu verarbeiteten Detektionssignal enthaltener Sequenzheader-Identifikator der gleiche ist wie der Sequenzheader-Identifikator, der in dem Detektionssignal enthalten ist, und ob eine in dem neu verarbeiteten Detektionssignal enthaltene Geräteportnummer die gleiche ist wie die Geräteportnummer, die in dem Detektionssignal enthalten ist; und
das detektierende Ende (10) eine Ausfallart eines physischen Links gemäß einem Detektionsergebnis bestimmt, wobei die Ausfallart des physischen Links Folgendes enthält: einen Offenkreis in dem physischen Link, einen Kurzschluss oder einen Loopback in dem physischen Link, ungepaartes Empfangen und Senden in dem physischen Link, und einen Loopback mit ungepaartem Empfangen und Senden in dem physischen Link.

9. Verfahren nach Anspruch 8, wobei eine Länge des Sequenzheader-Identifikators größer ist als eine Länge der Geräteportnummer des detektierenden Endes (10).

10. Verfahren nach Anspruch 8 oder 9, wobei der Schritt, in dem das detektierende Ende (10) eine Ausfallart eines physischen Links bestimmt, des Weiteren Folgendes umfasst:
wenn das detektierende Ende (10) nicht detektiert, dass die Detektionssequenz in dem neu verarbeiteten Detektionssignal den Sequenzheader-Identifikator enthält, Bestimmen, dass ein Ausfall eines physischen Links eingetreten ist und die Ausfallart der Offenkreis in dem physischen Link ist.

11. Verfahren nach Anspruch 8 oder 9, wobei der Schritt, in dem das detektierende Ende (10) eine Ausfallart eines physischen Links bestimmt, des Weiteren Folgendes umfasst:
wenn das detektierende Ende (10) detektiert, dass der in dem neu verarbeiteten Detektionssignal enthaltene Sequenzheader-Identifikator und der in dem gesendeten Detektionssignal enthaltene Sequenzheader-Identifikator gleich sind und die in dem neu verarbeiteten Detektionssignal enthaltene Geräteportnummer und die in dem gesendeten Detektionssignal enthaltene Geräteportnummer gleich sind, so bestimmt das detektierende Ende (10), dass der physische Link normal ist.

12. Verfahren nach Anspruch 8 oder 9, wobei der Schritt, in dem das detektierende Ende (10) eine Ausfallart eines physischen Links bestimmt, des Weiteren Folgendes umfasst:
wenn das detektierende Ende (10) detektiert, dass der in dem neu verarbeiteten Detektionssignal enthaltene Sequenzheader-Identifikator und der in dem gesendeten Detektionssignal enthaltene Sequenzheader-Identifikator entgegengesetzt sind und die in dem neu verarbeiteten Detektionssignal enthaltene Geräteportnummer und die in dem gesendeten Detektionssignal enthaltene Geräteportnummerwerden kein vollständig Bit-weises NOT sind, so bestimmt das detektierende Ende (10), dass der physische Link der Loopback mit ungepaartem Empfangen und Senden ist.

13. Verfahren nach Anspruch 8 oder 9, wobei der Schritt, in dem das detektierende Ende (10) eine Ausfallart eines physischen Links bestimmt, des Weiteren Folgendes umfasst:
wenn das detektierende Ende (10) detektiert, dass der in dem neu verarbeiteten Detektionssignal enthaltene Sequenzheader-Identifikator und der in dem gesendeten Detektionssignal enthaltene Sequenzheader-Identifikator entgegengesetzt sind und die in dem neu verarbeiteten Detektionssignal enthaltene Geräteportnummer und die in dem gesendeten Detektionssignal enthaltene Geräteportnummer ein vollständig Bit-weises NOT sind, so bestimmt das detektierende Ende (10), dass der physische Link der Kurzschluss oder der Loopback ist.

14. Verfahren nach Anspruch 8 oder 9, wobei der Schritt, in dem das detektierende Ende (10) eine Ausfallart eines physischen Links bestimmt, des Weiteren Folgendes umfasst:
wenn das detektierende Ende (10) detektiert, dass der in dem neu verarbeiteten Detektionssignal enthaltene Sequenzheader-Identifikator und der in dem gesendeten Detektionssignal enthaltene Sequenzheader-Identifikator gleich sind und die in dem neu verarbeiteten Detektionssignal enthaltene Geräteportnummer und die in dem gesendeten Detektionssignal enthaltene Geräteportnummer entgegengesetzt sind, so bestimmt das detektierende Ende (10), dass der physische Link das ungepaarte Empfangen und Senden ist.

## Revendications

1. Dispositif de détection d'une liaison physique, comprenant
un module d'envoi de signal de détection (1010), qui est utilisé pour effectuer : l'envoi d'un signal de détection à une extrémité détectée (20), dans lequel le signal de détection inclut une séquence de détection et la séquence de détection inclut un identifiant d'en-tête de séquence et un numéro de port d'équipement ;
un module de réception de signal de détection (1011), qui est utilisé pour effectuer : la réception d'un signal de détection retourné après l'exécution, par l'extrémité détectée (20), d'un premier traitement sur le signal de détection au moyen d'un NOT binaire ;
un module de traitement de signal de détection (1012), qui est utilisé pour effectuer : l'exécution d'un deuxième traitement au moyen du NOT binaire sur le signal de détection retourné qui est retourné par l'extrémité détectée (20), et l'envoi d'un signal de détection retraité à un module de détection (1013) ; et
le module de détection (1013), qui est utilisé pour effectuer : la détection si un identifiant d'en-tête de séquence inclus dans le signal de détection retraité est identique à l'identifiant d'en-tête de séquence inclus dans le signal de détection envoyé par le module d'envoi de signal de détection (1010) et si un numéro de port d'équipement inclus dans le signal de détection retraité est identique au numéro de port d'équipement inclus dans le signal de détection envoyé par le module d'envoi de signal de détection (1010), alors la détermination d'un type de défaillance d'une liaison physique en fonction d'un résultat de détection, dans lequel le type de défaillance de la liaison physique comprend : un circuit ouvert dans la liaison physique, un court-circuit ou un bouclage dans la liaison physique, une réception et un envoi désappariés dans la liaison physique, et un bouclage avec une réception et un envoi désappariés dans la liaison physique.

2. Dispositif selon la revendication 1, dans lequel une longueur de l'identifiant d'en-tête de séquence est supérieure à une longueur du numéro de port d'équipement d'une extrémité de détection (10).

3. Dispositif selon la revendication 1 ou 2, dans lequel le module de détection (1013) est également utilisé pour effectuer la détection si une séquence de détection dans le signal de détection retraité reçu par le module de détection (1013) inclut un identifiant d'en-tête de séquence ; si tel n'est pas le cas, la détermination qu'une défaillance de liaison physique est survenue et le type de défaillance est le circuit ouvert dans la liaison physique.

4. Dispositif selon la revendication 1 ou 2, dans lequel le module de détection (1013) est également utilisé pour effectuer la détection que l'identifiant d'en-tête de séquence inclus dans le signal de détection retraité est identique à l'identifiant d'en-tête de séquence inclus dans le signal de détection envoyé par le module d'envoi de signal de détection (1010), et le numéro de port d'équipement inclus dans le signal de détection retraité est identique au numéro de port d'équipement inclus dans le signal de détection envoyé par le module d'envoi de signal de détection (1010), alors la détermination que la liaison physique est normale.

5. Dispositif selon la revendication 1 ou 2, dans lequel le module de détection (1013) est également utilisé pour effectuer la détection que l'identifiant d'en-tête de séquence inclus dans le signal de détection retraité est identique à l'identifiant d'en-tête de séquence inclus dans le signal de détection envoyé par le module d'envoi de signal de détection (1010), et le numéro de port d'équipement inclus dans le signal de détection retraité est opposé au numéro de port d'équipement inclus dans le signal de détection envoyé par le module d'envoi de signal de détection (1010), alors la détermination que la liaison physique est la réception et l'envoi désappariés.

6. Dispositif selon la revendication 1 ou 2, dans lequel le module de détection (1013) est également utilisé pour effectuer la détection que l'identifiant d'en-tête de séquence inclus dans le signal de détection retraité est opposé à l'identifiant d'en-tête de séquence inclus dans le signal de détection envoyé par le module d'envoi de signal de détection (1010), et le numéro de port d'équipement inclus dans le signal de détection retraité est totalement NOT binaire au numéro de port d'équipement inclus dans le signal de détection envoyé par le module d'envoi de signal de détection (1010), alors la détermination que la liaison physique est le court-circuit ou le bouclage.

7. Dispositif selon la revendication 1 ou 2, dans lequel le module de détection (1013) est également utilisé pour effectuer la détection que l'identifiant d'en-tête de séquence inclus dans le signal de détection retraité est opposé à l'identifiant d'en-tête de séquence inclus dans le signal de détection envoyé par le module d'envoi de signal de détection (1010), et le numéro de port d'équipement inclus dans le signal de détection retraité est totalement NOT binaire au numéro de port d'équipement inclus dans le signal de détection envoyé par le module d'envoi de signal de détection (1010), alors la détermination que la liaison physique est le bouclage avec une réception et un envoi désappariés.

8. Procédé de détection d'une liaison physique, comprenant :
l'envoi, par une extrémité de détection (10), d'un signal de détection à une extrémité détectée (20), dans lequel le signal de détection inclut une séquence de détection et la séquence de détection inclut un identifiant d'en-tête de séquence et un numéro de port d'équipement ;
la réception, par l'extrémité de détection (10), d'un signal de détection retourné par l'extrémité détectée (20) après l'exécution, par l'extrémité détectée (20), d'un premier traitement sur le signal de détection au moyen d'un NOT binaire ; et
l'exécution, par l'extrémité de détection (10), d'un deuxième traitement au moyen du NOT binaire sur le signal de détection retourné pour obtenir un signal de détection retraité, et la détection si un identifiant d'en-tête de séquence inclus dans le signal de détection retraité est identique à l'identifiant d'en-tête de séquence inclus dans le signal de détection et si un numéro de port d'équipement inclus dans le signal de détection retraité est identique au numéro de port d'équipement inclus dans le signal de détection ; et
la détermination, par l'extrémité de détection (10), d'un type de défaillance d'une liaison physique en fonction d'un résultat de détection, dans lequel le type de défaillance de la liaison physique comprend : un circuit ouvert dans la liaison physique, un court-circuit ou un bouclage dans la liaison physique, une réception et un envoi désappariés dans la liaison physique, et un bouclage avec une réception et un envoi désappariés dans la liaison physique.

9. Procédé selon la revendication 8, dans lequel une longueur de l'identifiant d'en-tête de séquence est supérieure à une longueur du numéro de port d'équipement de l'extrémité de détection (10).

10. Procédé selon la revendication 8 ou 9, dans lequel l'étape de la détermination, par l'extrémité de détection (10), d'un type de défaillance d'une liaison physique comprend en outre :
lorsque l'extrémité de détection (10) ne détecte pas que la séquence de détection dans le signal de détection retraité inclut l'identifiant d'entête de séquence, la détermination qu'une défaillance de liaison physique est survenue et le type de défaillance est le circuit ouvert dans la liaison physique.

11. Procédé selon la revendication 8 ou 9, dans lequel l'étape de la détermination, par l'extrémité de détection (10), d'un type de défaillance d'une liaison physique comprend en outre :
lors de la détection, par l'extrémité de détection (10), que l'identifiant d'en-tête de séquence inclus dans le signal de détection retraité est identique à l'identifiant d'en-tête de séquence inclus dans le signal de détection envoyé, et le numéro de port d'équipement inclus dans le signal de détection retraité est identique au numéro de port d'équipement inclus dans le signal de détection envoyé, la détermination que la liaison physique est normale.

12. Procédé selon la revendication 8 ou 9, dans lequel l'étape de la détermination, par l'extrémité de détection (10), d'un type de défaillance d'une liaison physique comprend en outre :
lors de la détection, par l'extrémité de détection (10), que l'identifiant d'en-tête de séquence inclus dans le signal de détection retraité est opposé à l'identifiant d'en-tête de séquence inclus dans le signal de détection envoyé, et le numéro de port d'équipement inclus dans le signal de détection retraité est totalement NOT binaire au numéro de port d'équipement inclus dans le signal de détection envoyé, la détermination que la liaison physique est le bouclage avec une réception et un envoi désappariés.

13. Procédé selon la revendication 8 ou 9, dans lequel l'étape de la détermination, par l'extrémité de détection (10), d'un type de défaillance d'une liaison physique comprend en outre :
lors de la détection, par l'extrémité de détection (10), que l'identifiant d'en-tête de séquence inclus dans le signal de détection retraité est opposé à l'identifiant d'en-tête de séquence inclus dans le signal de détection envoyé, et le numéro de port d'équipement inclus dans le signal de détection retraité est totalement NOT binaire au numéro de port d'équipement inclus dans le signal de détection envoyé, la détermination que la liaison physique est le court-circuit ou le bouclage.

14. Procédé selon la revendication 8 ou 9, dans lequel l'étape de la détermination, par l'extrémité de détection (10), d'un type de défaillance d'une liaison physique comprend en outre :
lors de la détection, par l'extrémité de détection (10), que l'identifiant d'en-tête de séquence inclus dans le signal de détection retraité est identique à l'identifiant d'en-tête de séquence inclus dans le signal de détection envoyé, et le numéro de port d'équipement inclus dans le signal de détection retraité est opposé au numéro de port d'équipement inclus dans le signal de détection envoyé, la détermination que la liaison physique est la réception et l'envoi désappariés.
